# EUROPÄISCHE PATENTANMELDUNG

(11) **EP 3 686 415 A1**
(43) Veröffentlichungstag der Anmeldung: **29.07.2020**
(21) Anmeldenummer: 19215897.0
(22) Anmeldetag: 13.12.2019
(51) Int. Cl.: F02D 41/00, F02D 41/30, F02D 41/14, F02D 41/24

(54) **VERFAHREN ZUR KORREKTUR VON ABWEICHUNGEN EINER LUFTMASSE ODER ABGASRÜCKFÜHRRATE UND EINSPRITZMENGE IN EINEM VERBRENNUNGSMOTOR**

(30) Priorität: 24.01.2019 DE 102019101680
(71) Anmelder: Bayerische Motoren Werke Aktiengesellschaft, 80809 München (DE)
(72) Erfinder: Passenbrunner, Thomas, 4407 Dietach (AT); Grubbauer, Martin, 4442 St.Peter/Au (AT)

(57) **Zusammenfassung**

Bereitgestellt wird eine Vorrichtung zur Korrektur von Abweichungen einer Luftmasse oder Abgasrückführrate und Einspritzmenge in einem Verbrennungsmotor eines Fahrzeugs mit mindestens einer elektronischen Steuereinheit. Die Steuereinheit ist derart ausgestaltet, dass in einem ersten Schritt eine notwendige Korrektur aus mittels einem oder mehreren Sensoren gemessener Ist-Luftüberschusszahl und berechneter Soll-Luftüberschusszahl ermittelt wird, und in einem zweiten Schritt eine Aufteilung der Korrektur auf die Ist-Luftmasse oder die Abgasrückführrate und die in der Hydraulik ermittelte Ist-Kraftstoff-Einspritzmenge erfolgt.

## Beschreibung

Die Erfindung betrifft ein Verfahren zur Korrektur von Abweichungen einer Luftmasse oder Abgasrückführrate und Einspritzmenge in einem Verbrennungsmotor.

Abgasrückführungssysteme, welche z.B. in einem Fahrzeug eingesetzt werden, werden typischerweise bei aufgeladenen Dieselmotoren zur Abgasrückführung verwendet. Die Verwendung des Systems ist aber nicht ausschließlich auf Dieselmotoren beschränkt. Insbesondere bei Dieselmotoren ist die Abgasrückführung eine entscheidende Maßnahme zur Senkung der Stickoxidemission, da der Einsatz von Abgasnachbehandlungssystemen allein zur Einhaltung umweltgesetzlicher Vorgaben nicht ausreichend, oder aus anderen Überlegungen wie Kosten, Gewicht, Reichweite, etc. nicht wirtschaftlich ist.

Auf Basis des Motorbetriebspunktes und weiterer Größen, wie beispielsweise Temperaturen und Luftdruck, erfolgt die Vorgabe der Abgasrückführrate, einer Luftmasse oder einer artverwandten Größe. Die Regelung der Abgasrückführung im Motorsteuergerät stellt dann sicher, dass diese Vorgabe umgesetzt wird und damit schlussendlich ein bestimmtes Gemisch von Frischluft und eingespritztem Kraftstoff im Brennraum sichergestellt wird. Dabei gibt die Luftüberschusszahl Lambda das Verhältnis der tatsächlich zugeführten Frischluft und der theoretisch benötigten Luft zur vollständigen Verbrennung des eingespritzten Kraftstoffes an.

Die zur Regelung nötigen Größen, wie eine erfasste Luftmasse, die Einspritzmenge, die Luftüberschusszahl Lambda und auch weitere relevante Größen eines Verbrennungsmotors, werden mittels Sensoren ermittelt, die unterschiedlich große und von vielen Faktoren abhängige Messfehler aufweisen, wodurch es zu Abweichungen in den Betriebsgrößen und Emissionen im Vergleich zur Motorauslegung kommen kann.

In der deutschen Patentanmeldung DE102016211311A1 wird eine Korrektur der AGR-Rate mittels gemessener Luftüberschusszahl und eine Adaption des Sensors im Schubbetrieb beschrieben. Das deutsche Gebrauchsmuster DE202015004385U1 beschreibt eine klassische, bekannte Korrekturfunktion für die Luftüberschusszahl unter Verwendung eines PID-Reglers. In dem deutschen Patent DE102010000928B3 wird vorgeschlagen, zunächst eine Anpassung der Einspritzmenge vorzunehmen, sodass eine Ist- und eine Soll-Luftüberschusszahl übereinstimmen. Falls aufgrund einer Begrenzung die Korrektur mittels Einspritzmenge nicht ausreicht, wird eine Korrektur der Luftmasse vorgenommen.

Da die Messung der Luftmasse, der Kraftstoff-Einspritzmengen, der Luftüberschusszahl und weiterer relevanter Größen mittels Sensoren erfolgt, welche unter bestimmten Bedingungen, beispielsweise nahe der Volllast, immer Messfehler aufweisen, ist es daher Aufgabe der Erfindung, eine verbesserte Korrektur der Luftmassen- und Abgasrückführraten-Regelung bereitzustellen, um eine bessere Emissionsstabilität zu erzielen. Diese Aufgabe wird erfindungsgemäß durch die Merkmale der unabhängigen Patentansprüche gelöst. Vorteilhafte Ausgestaltungen sind Gegenstand der abhängigen Ansprüche.

Bisher wird die Luftüberschusszahl mittels einer Korrekturfunktion gemäß folgender Funktionsweise angepasst: Es wird anhand der Differenz zwischen Ist-Luftüberschusszahl, welche beispielsweise mittels Lambdasonde oder Stickoxidsensor gemessen wird, und Soll-Luftüberschusszahl, welche aus z.B. im Motorsteuergerät vorhandenen Sollwerten berechnet wird, eine Korrektur der Eingangsgrößen des Soll-Luftmassenkennfelds bzw. des Soll-Abgasrückführraten-Kennfelds bestimmt. Die Berechnung kann z.B. mittels eines PI-Reglers oder eines anderen geeigneten Reglers erfolgen. Durch die Korrektur der Eingangsgröße kommt es zu einer Verschiebung im Sollwertkennfeld, wodurch die Differenz zwischen Ist- und Soll-Luftüberschusszahl zu Null wird, zumindest solange beispielsweise keine Begrenzungen wirken. Das heißt, dass ein angepasster Sollwert für die Luftmasse oder die Abgasrückführrate und damit eine Angleichung zwischen gemessener und aus Sollwerten berechneter Luftüberschusszahl Lambda erfolgt. Der I-Anteil des PI-Reglers wird gegebenenfalls noch in geeigneter Weise in einem Lernkennfeld abgelegt, sodass die gelernte Korrektur über die Fahrzyklen erhalten bleibt. Die Korrektur wird üblicherweise in der Domäne Einspritzmenge dargestellt, da diese die entsprechende Eingangsgröße in das Sollwert-Kennfeld darstellt.

Nachteilig bei diesem Verfahren ist, dass die Korrektur nur auf die Eingangsgröße des Sollwertkennfelds für Luftmasse oder Abgasrückführrate wirkt, und zwar unabhängig davon, ob die Abweichung zwischen gemessener und aus Sollwerten berechneter Luftüberschusszahl durch einen Fehler der Erfassung der Luftmasse oder durch einen Fehler im Einspritzsystem hervorgerufen wird.

Diese Funktion führt also über eine Anpassung des Sollwerts für die Luftmasse oder Abgasrückführrate zu einer veränderten Abgasrückführrate bzw. Luftmasse. Die Differenz zwischen Ist- und Soll-Luftüberschusszahl wird nicht direkt in der Regelung der Abgasrückführrate bzw. Luftmasse verwendet, sondern als Korrektur in einer Art übergeordnetem Regelkreis. Es kommt damit bei aktiver Korrektur zwar zu einer Angleichung zwischen gemessener und aus Sollwerten berechneter Luftüberschusszahl, allerdings kommt es auch zu einer Verschiebung der Luftüberschusszahl gegenüber dem Auslegungsmotor. Da in bestimmten Betriebsbereichen wie höheren Lasten bis hin zur Volllast oder auch sehr niedrigen Lasten teils große Messfehler der Sensoren zu erwarten sind und die aktuelle Korrektur auf positive Gradienten im Sollwertkennfeld für die Luftmasse bzw. Abgasrückführrate angewiesen ist, wird in diesem Bereich die Korrektur oft deaktiviert, was zu erhöhten Schadstoffemissionen führen kann.

Diese Probleme werden wie nachfolgend beschrieben verbessert. Vorgeschlagen wird eine Vorrichtung zur Korrektur von Abweichungen einer Luftmasse oder Abgasrückführrate und Einspritzmenge in einem Verbrennungsmotor eines Fahrzeugs mit mindestens einer elektronischen Steuereinheit, wobei das folgende Verfahren durchgeführt wird. In einem ersten Schritt wird eine Korrektur aus mittels einem oder mehreren Sensoren gemessener Ist-Luftüberschusszahl und berechneter Soll-Luftüberschusszahl ermittelt. In einem zweiten Schritt erfolgt eine Aufteilung der Korrektur auf die Ist-Luftmasse und die in der Hydraulik ermittelte Ist-Kraftstoff-Einspritzmenge. Durch das Aufteilen der ermittelten Korrektur in geeigneter Weise erfolgt eine bedarfsgemäße und verbesserte Aufteilung. Somit kann ein Abschalten der Korrektur vor allem in extremen Betriebsbereichen im Wesentlichen vermieden werden.

Die Aufteilung der Korrektur erfolgt in einer Ausführung auf Basis eines vom Betriebspunkt des Motors abhängigen Kennfelds.

In einer Ausführung erfolgt im zweiten Schritt die Aufteilung der Korrektur in Abhängigkeit weiterer im Steuergerät vorhandener Größen und/oder vorhandenen zusätzlichen Korrekturfunktionen der Hydraulik und/oder Emissionssensoren. Dabei sind weitere im Steuergerät vorhandene Größen z.B. die Füllung, d.h. alle Stoffe, die der Motor während des Ansaugtakts ansaugt.

In einer Ausführung wird im zweiten Schritt die Aufteilung der Korrektur in Abhängigkeit von Ungenauigkeiten von verwendeten Sensoren berechnet, wobei die Ungenauigkeiten als Konstantwerte, Kennlinien oder Kennfelder abgebildet sein können bzw. sind. Dabei können die Konstantwerte, Kennlinien oder Kennfelder vorab ermittelt werden und damit als vorgegebene Werte verwendet werden. Dies verringert die benötigte Rechenleistung.

In einer weiteren Ausführung wird die Aufteilung entsprechend einer der oben beschriebenen Ausführungen sichergestellt, es kommt aber zu einer Begrenzung der Aufteilung, d.h. die Aufteilung erfolgt nur innerhalb vorgegebener Grenzen. Dadurch wird beispielsweise vermieden, dass Fehler der Hardware zu einer Fehl-Aufteilung führen. Die Begrenzung kann erfolgen, indem das Verhältnis der einzustellenden Parameter begrenzt wird, oder indem absolute Werte als Grenzen vorgegeben werden.

Ferner wird ein Computer-Programmprodukt für die mindestens eine elektronische Steuereinheit zur Durchführung des Verfahrens vorgeschlagen. Außerdem wird ein Fahrzeug bereitgestellt, aufweisend ein Abgasrückführsystem, einen damit in Wirkverbindung stehenden Verbrennungsmotor, und eine Steuereinheit mit darauf ausgeführtem Computer-Programmprodukt zur Durchführung des Verfahrens.

Mittels der AGR-Strecke kann sowohl die Luftmasse als auch alternativ die AGR-Rate geregelt werden. Die vorgeschlagene Korrektur wirkt dann auf eine dieser beiden Größen sowie zusätzlich auch auf die Einspritzmenge. Durch das Aufteilen der ermittelten Korrektur in geeigneter Weise auf die vom Messgerät gemessene Ist-Luftmasse oder Abgasrückführrate und auf die in der Hydraulik ermittelten Ist-Kraftstoff-Einspritzmengen kann die Korrektur individuell sowohl auf die Luftmassenerfassung, also Luftmasse oder Abgasrückführrate, als auch auf die von der Hydraulik eingespritzte Kraftstoffmasse bzw. Einspritzmenge erfolgen, je nach Bedarf. Ferner kann die Aufteilung abhängig vom Betriebspunkt des Motors, z.B. Einspritzmenge und Motordrehzahl, festgelegt oder bei intelligenter Aufteilung zwischen Luftmasse oder Abgasrückführrate und Einspritzmenge für einen oder für alle Parameter auf vorgegebene Maximal- oder Minimalwerte eingeschränkt werden. In einer Ausführung erfolgt deshalb im zweiten Schritt die Korrektur nur innerhalb vorgegebener Grenzen. Beispielsweise soll die Korrektur bei einem Hardwarefehler nicht beliebig weit korrigieren können, um eine Fehlkorrektur aufgrund des Hardwarefehlers zu vermeiden.

Da die Korrektur simultan und in der richtigen Größenordnung auf Abweichungen in der Luftmassenerfassung und in der Hydraulik reagieren kann, ist eine Übergabe von einer Korrektur auf eine andere nicht notwendig. Ferner bleibt die Luftüberschusszahl zwischen goldenem Motor und einem Motor mit Abweichungen in der Luftmassenerfassung bzw. Hydraulik gleich, wodurch auch die Emissionen bei vorhandenen Abweichungen sichergestellt werden können.

Die Steuereinheit führt vorteilhafterweise den Ablauf als Verfahren mittels eines Computer-Programmprodukts durch. Die Steuereinheit ist dafür ausgelegt, Messwerte des Sauerstoffgehalts im Abgas des Fahrzeugs von der Lambdasonde oder einem anderen geeigneten Messgerät, z.B. Stickoxidsensor, sowie Daten zur aktuellen Einspritzmenge an Kraftstoff zu empfangen und zu verarbeiten. Basierend auf diesen Daten kann sie entsprechende Steuer- oder Regelsignale zur Ausführung des Verfahrens an die entsprechenden Regeleinheiten wie z.B. Einspritzventile oder Luftansaugung ausgeben.

Mit dem vorgeschlagenen Verfahren ist es nicht mehr nötig, die Korrektur zu deaktivieren. Unter bestimmten Voraussetzungen kann jedoch eine Eingrenzung der Korrektur vorgesehen werden, so dass dennoch weniger Schadstoffe ausgestoßen werden.

Außerdem ist es möglich, dass bei Vorhandensein einer gut funktionierenden Korrekturfunktion der Hydraulik die erfindungsgemäß vorgeschlagene Korrekturfunktion nur mehr den anteiligen Fehler der Luftmassenerfassung korrigiert. Somit kann das Verfahren vereinfacht werden und Regelfehler werden verringert.

Die Steuereinheit ist vorteilhafterweise ein Motorsteuergerät, da hier alle relevanten Informationen zur Steuerung bzw. Regelung des Motors und damit auch der Abgasnachbehandlung verfügbar sind. Somit kann bereits vorhandene Hardware genutzt werden und es ist kein zusätzlicher Platz im Fahrzeug für die Korrektur und Regelung vorzusehen.

Die vorgeschlagene Erfindung stellt eine Korrektur sowohl der Luftmassenerfassung als auch der von der Hydraulik eingespritzten Kraftstoffmasse bereit. Die Aufteilung kann in einer einfachen Ausprägung auf Basis eines Kennfelds erfolgen, welches z.B. auf in einem initialen Schritt festgelegten Daten beruht. Die Daten können z.B. aufgrund der Kenntnis von Ungenauigkeiten bzw. Messfehlern der verwendeten Sensoren, insbesondere bei bestimmten bekannten Bedingungen wie Voll-Last, ermittelt und damit vorab für die Erstellung des Kennfelds zur Verfügung gestellt werden.

Außerdem können weitere Ausprägungen der Aufteilung bis hin zu einer intelligenten Aufteilung realisiert werden, die feststellt, woher die Abweichung in der Luftüberschusszahl resultiert und jeden Parameter entsprechend korrigiert.

Das Verfahren wird besonders vorteilhaft für Dieselmotoren, insbesondere im Automobilbereich, eingesetzt und kann auch für Ottomotoren eingesetzt werden. Durch das vorgeschlagene Verfahren kann eine direkte Korrektur der Luftüberschusszahl, genauer der einzelnen Parameter Luftmasse oder Abgasrückführrate, und der Einspritzmenge erfolgen und somit Emissionen wirksamer reduziert werden.

Weitere Merkmale und Vorteile der Erfindung ergeben sich aus der nachfolgenden Beschreibung von Ausführungsbeispielen der Erfindung, anhand der Figuren der Zeichnung, die erfindungsgemäße Einzelheiten zeigt, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnung näher erläutert.
Fig. 1 zeigt wichtige Komponenten zur Durchführung des Verfahrens gemäß einer Ausführung der vorliegenden Erfindung.
Fig. 2 zeigt ein Ablaufdiagramm des Verfahrens gemäß einer Ausführung der vorliegenden Erfindung.

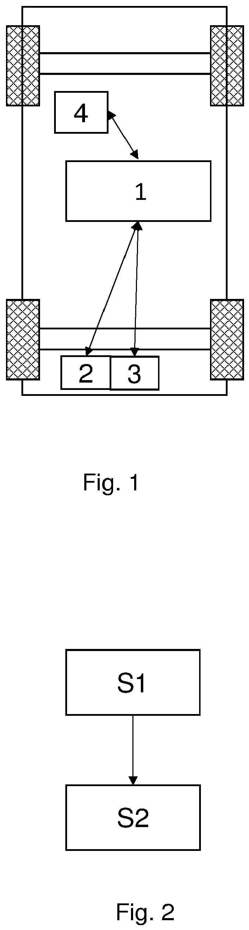

Figur 1 zeigt wichtige Komponenten zur Durchführung des Verfahrens gemäß einer Ausführung der Erfindung. Die Steuereinheit 1 dient dazu, alle für die Durchführung des Verfahrens relevanten Daten von entsprechenden Einheiten zu empfangen, zu verarbeiten und die aus der Verarbeitung resultierenden Steuer- bzw. Regelsignale an die entsprechenden Einheiten zur Durchführung auszugeben. Die Einheiten sind insbesondere die Luftansaugung, welche die Menge an angesaugter (Frisch-)Luft, die Luftmasse 2, welche dem Verbrennungsraum zugeführt wird, und/oder das Abgasrückführsystem, welche die Abgasrückführrate 3 reguliert, d.h. die Menge an Abgasen, welche wieder dem Verbrenner zugeführt wird, regulieren, und die Hydraulik, welche die Kraftstoff-Einspritzmenge 4 in den Verbrennungsraum zuführt und reguliert. Diese Parameter werden zur Berechnung der Luftüberschusszahl Lambda im ersten Schritt S1, wie in Figur 2 gezeigt, verwendet, welche den Sauerstoffanteil im Abgas angibt und damit ein Indikator für ausgestoßene Emissionen ist. Die Berechnung der Korrektur erfolgt im zweiten Schritt S2 dann wiederum in der Steuereinheit 1, welche dann die Signale zur Korrektur an den oder die Regler weitergibt, welche die Regelung dann durchführen. Je nach Ausführung wird also einer der beiden Parameter, also Luftmasse 2 oder Abgasrückführrate 3, und zusätzlich Kraftstoff-Einspritzung 4 korrigiert.

## Patentansprüche

1. Vorrichtung zur Korrektur von Abweichungen einer Luftmasse (2) oder Abgasrückführrate (3) und Einspritzmenge (4) in einem Verbrennungsmotor eines Fahrzeugs mit mindestens einer elektronischen Steuereinheit (1), wobei die Steuereinheit (1) derart ausgestaltet ist, dass
- in einem ersten Schritt (S1) eine notwendige Korrektur aus mittels einem oder mehreren Sensoren gemessener Ist-Luftüberschusszahl und berechneter Soll-Luftüberschusszahl ermittelt wird, und wobei
- in einem zweiten Schritt (S2) eine Aufteilung der Korrektur auf die Ist-Luftmasse (2) oder die Abgasrückführrate (3) und die in der Hydraulik ermittelte Ist-Kraftstoff-Einspritzmenge (4) erfolgt.

2. Vorrichtung nach Anspruch 1, wobei im zweiten Schritt (S2) die Aufteilung der Korrektur auf Basis eines vom Betriebspunkt des Verbrennungsmotors abhängigen Kennfelds erfolgt.

3. Vorrichtung nach Anspruch 1, wobei im zweiten Schritt (S2) die Aufteilung der Korrektur in Abhängigkeit von weiterer im Steuergerät vorhandener Größen, umfassend zumindest die Füllung, und/oder vorhandenen zusätzlichen Korrekturfunktionen der Hydraulik und/oder Emissionssensoren erfolgt.

4. Vorrichtung nach einem der vorgehergehenden Ansprüche, wobei im zweiten Schritt (S2) die Aufteilung der Korrektur in Abhängigkeit von Ungenauigkeiten der verwendeten Sensoren berechnet und in einem Konstantwert, einer Kennlinie oder einem Kennfeld bereitgestellt wird.

5. Vorrichtung nach einem der vorgehergehenden Ansprüche, wobei im zweiten Schritt (S2) die Korrektur nur innerhalb vorgegebener Grenzen erfolgt.

6. Verfahren zur Korrektur von Abweichungen einer Luftmasse (2) oder Abgasrückführrate (3) und Kraftstoff-Einspritzmenge (4) in einem Verbrennungsmotor eines Fahrzeugs, bei dem
- in einem ersten Schritt (S1) eine notwendige Korrektur aus gemessener Ist-Luftüberschusszahl und berechneter Soll-Luftüberschusszahl ermittelt wird, und
- in einem zweiten Schritt (S2) eine Aufteilung der Korrektur auf die Ist-Luftmasse (2) oder die Abgasrückführrate (3) und die in der Hydraulik ermittelte Ist-Kraftstoff-Einspritzmenge (4) erfolgt.

7. Computer-Programmprodukt für die mindestens eine elektronische Steuereinheit (1) zur Durchführung des Verfahrens, gemäß einem der vorstehenden Ansprüche.

8. Fahrzeug, aufweisend ein AGR-System, einen damit in Wirkverbindung stehenden Verbrennungsmotor, und eine Steuereinheit (1) mit darauf durchgeführtem Computer-Programmprodukt zur Durchführung des Verfahrens, gemäß einem der vorstehenden Ansprüche.
